**Europäisches Patentamt**

**European Patent Office**

**Office européen des brevets**

(19)

(11) Numéro de publication: **0 132 481**
**B1**

(12)

# FASCICULE DE BREVET EUROPEEN

(45) Date de publication du fascicule du brevet:
28.10.87

(51) Int. Cl.⁴: **H 04 J 3/16**, H 04 L 25/36,
G 06 F 13/00

(21) Numéro de dépôt: **83430026.1**

(22) Date de dépôt: **28.07.83**

(54) **Dispositif tampon et système de transmission de données comportant ledit dispositif.**

(43) Date de publication de la demande:
**13.02.85 Bulletin 85/7**

(45) Mention de la délivrance du brevet:
**28.10.87 Bulletin 87/44**

(84) Etats contractants désignés:
**DE FR GB**

(56) Documents cités:
**EP - A - 0 054 490**
**EP - A - 0 064 120**
**DE - A - 2 555 864**
**DE - A - 2 802 160**
**US - A - 4 056 851**
**US - A - 4 096 565**

(73) Titulaire: **International Business Machines Corporation,
Old Orchard Road, Armonk, N.Y. 10504 (US)**

(84) Etats contractants désignés: **DE GB**

(73) Titulaire: **Compagnie IBM FRANCE, 5 Place Vendôme,
F-75000 Paris 1er (FR)**

(84) Etats contractants désignés: **FR**

(72) Inventeur: **Huon, Simon, Chemin du Trastour,
F-06330 Roquefort-les-Pins (FR)**
Inventeur: **Spagnol, Victor, 12, Bis Chemin des Collettes,
F-06800 Cagnes-Sur-Mer (FR)**

(74) Mandataire: **Tubiana, Max, Compagnie IBM France
Département de Propriété Industrielle, F-06610 La
Gaude (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne les communications de type numérique dans lesquelles les techniques de multiplexage sont utilisées pour concentrer les données de plusieurs canaux numériques sur une même voie de communications. Elle concerne plus particulièrement un dispositif tampon pouvant être utilisé comme interface dans le domaine des communications numériques.

Etat de la technique

La construction de lignes, ou plus généralement de voies de communications étant onéreuse, on a tout intérêt à exploiter lesdites voies de communications au mieux de leurs possibilités. Pour ce faire, on a développé un certain nombre de techniques parmi lesquelles se trouvent les techniques dites de multiplexage grâce auxquelles on peut concentrer les données de plusieurs canaux ou terminaux rattachés à ces canaux sur une voie de communication commune.

En pratique les données binaires ne peuvent être transmises directement sur la voie de communication en raison des limitations de la bande passante de celle-ci. On passe alors par des opérations dites de modulation. On s'intéressera plus particulièrement ici aux techniques de modulation dites à double bandes latérales-porteuses en quadrature (DSB–QC). Pour appliquer ces techniques, le train de données binaires ou bits obtenus par multiplexage des canaux d'entrée est périodiquement scindé en groupes comportant chacun un nombre prédéterminé (N) de bits. On dira ici que chaque groupe constitue un N-bit. La valeur numérique de chaque N-bit définit l'amplitude à donner à chacune de deux porteuses en quadrature. L'onde résultant de la combinaison des porteuses en quadrature modulées en amplitude est alors transmise sous forme analogique sur la voie de transmission. Côté réception, des opérations de démodulation et démultiplexage permettront de retrouver les bits d'origine et de les orienter vers les terminaux destinataires.

L'ensemble des opérations modulation/démodulation est réalisé au sein d'un dispositif dit modem. A ce dispositif est associé l'élément multiplexeur/démultiplexeur dit carte multiplex desservant les terminaux connectés aux canaux d'entrée. On désigne parfois par modem multicanaux ou même simplement par modem l'ensemble comprenant le modem proprement dit et la carte multiplex.

A l'émission chaque source ou terminal fournit des bits de données à un rythme qui lui est propre. Après multiplexage, les N-bits obtenus à partir du train de bits multiplexés sont prélevés pour être soumis au modulateur à des instants précis, dits instants de signalisation, définis par le modulateur lui-même. La période séparant deux instants de signalisation consécutifs correspond à un temps baud. Les opérations de traitement des N-bits en vue de modulation sont des opérations dites de traitement de signal et sont souvent réalisées par microprocesseur programmé. L'opération de prise en charge de chaque N-bit pour traitement par le processeur est une opération dite d'entrée/sortie mettant en jeu une demande d'interruption que le microprocesseur exécute et satisfait aux instants où il est disponible pour ce genre d'opérations. Il existe donc asynchronisme entre l'introduction des bits de données dans la carte multiplex à partir des terminaux et la prise en charge des N-bits par le microprocesseur. Pour éviter toute perte d'information, un dispositif tampon de dimensions variables est nécessaire au sein de la carte multiplex pour assurer une fonction d'interface entre les sources de bits d'entrée et le dispositif de prélèvement des N-bits. C'est ce qui explique la présence dans les cartes multiplex de l'art antérieur de registres dits registres élastiques comme le montre le brevet Européen 0 064 120. Plus précisément, à chaque canal d'entrée est associé un registre à décalage dans lequel le terminal correspondant introduit ses bits à son rythme propre. Quant aux prélèvements de bits pour construction de chaque N-bits, ils se font aux instants définis par le microprocesseur du modem. Les écarts variables entre l'introduction et la sortie des bits des registres tampons expliquent la qualification d'élastique donnée à ces registres. On comprend aisément que plus la longueur de chaque registre élastique est importante, plus on diminue les risques de pertes de bits. En contre-partie, l'allongement des registres augmente le coût et la complexité du dispositif de transmission. On est donc amené à choisir des registres relativement courts. Si les conditions de fonctionnement nécessitent des registres plus longs, la modification exige un retour de l'équipement en usine.

En outre, les modems actuels sont conçus pour être rattachés à plusieurs terminaux dont seuls quelques uns seront actifs à un instant donné. Plus précisément, plusieurs possibilités de configurations de canaux ou terminaux actifs sont définis à la construction, et, lors du fonctionnement, l'opérateur, ou un dispositif logique, définit la configuration de canaux actifs à utiliser à un moment donné. Naturellement, ce choix peut être modifié à tout moment. L'utilisation d'un registre élastique associé à chaque canal d'entrée de l'émetteur confère au système une certaine rigidité sur le plan du changement de configuration de canaux actifs. Un ensemble logique complexe est nécessaire pour assurer les gestions de registres lors d'un changement de configuration.

D'où l'intérêt d'un dispositif assurant les fonctions des registres élastiques mais dont la gestion serait beaucoup plus souple qu'elle ne l'était dans l'art antérieur cité ci-dessus. Ce dispositif pourrait être basé sur l'utilisation d'une mémoire à accès aléatoire du genre proposé dans le brevet US-A-4 056 851. Encore faut-il qu'un tel dispositif soit adapté à inferfacer des sources de vitesses différentes et dont les bits seraient disposés selon un ou plusieurs ordres prédéterminés.

Resume de l'invention

L'invention a pour objet un dispositif tampon élastique destiné à un système dans lequel les bits de données fournis par des terminaux opérant à des rythmes qui leur sont propres sont multiplexés et prélevés de manière asynchrone par groupes de N-bits. Le dispositif tampon comprend notamment une mémoire à accès aléatoire à laquelle sont associés des registres pointeurs d'entrée et de sortie, et des moyens logiques indiquant pour chaque configuration de canaux d'entrée choisie la séquence des adresses de colonnes de mémoire affectées à chaque canal actif.

D'autres objet, caractéristiques et avantages de la présente invention ressortiront de la description suivante faite en référence aux dessins annexés.

Brève description des figures

Figure 1: représente une configuration générale d'un système de transmission destiné à comporter le dispositif de l'invention.

Figure 2: représente un schéma général permettant de situer l'invention au sein du dispositif 36 de la figure 1.

Figure 3 et 4: montrent le détail de certains éléments de l'invention.

Description détaillée de l'invention

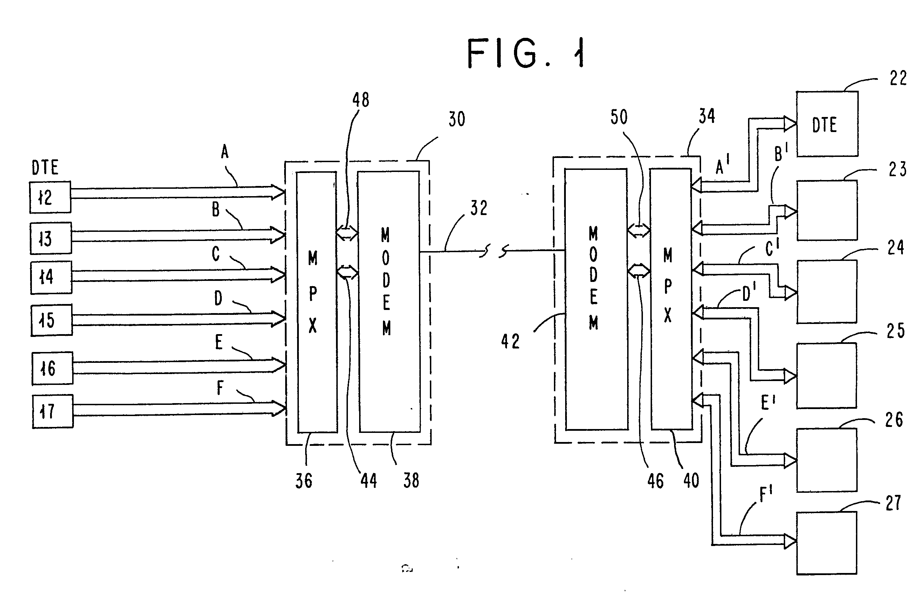

La figure 1 montre la configuration générale d'un système de communications numériques. Des équipements terminaux de traitement de données (DTE) 12, 13, 14, 15, 16 et 17 dits à Nouvel. Pages le 12/09/1986 Appl. n° 83 430 026.1–2202 basses vitesses sont reliés à un modem multicanaux 30 au travers de canaux A, B, C, D, E, F. Les liaisons sur lesdits canaux se font selon les normes V24 (dites aussi jonctions de type V24) définies par le Comité Consultatif International pour le Télégraphe et le Téléphone (CCITT), ou selon les normes américaines équivalentes EIA RS 232 C. Le modem multi-canaux 30 est relié par une voie de communications haute vitesse 32 à un autre modem multicanaux 34 de même type que 30. Le modem multicanaux 34 est relié aux terminaux de traitement de données 22, 23, 24, 25, 26 et 27 par des canaux A', B', C', D', E', F' semblables aux canaux A, B, C, D, E et F. Les jonctions entre modem 34 et terminaux 22 à 27 sont aussi du type V24 du CCITT.

Chacun des modems multi-canaux 30 et 34 comporte essentiellement deux parties. L'une, désignée par 36 ou 40 selon l'extrémité de la voie de communications 32 considérée, est constituée par un dispositif de multiplexage (ou carte multiplex). L'autre désignée par 38 ou 42 est constituée par un modem proprement dit. Les modems multi-canaux 30 et 34 peuvent, par exemple, être des modems IBM 3865 modifiés de façon à incorporer l'invention. Chacun des dispositifs de multiplexage 36 ou 40, est relié au modem correspondant par une jonction de type V24, désignée par 44 ou 46, et éventuellement par un bus 48 ou 50.

En fonctionnement, pour une transmission des terminaux 12 à 17 vers les terminaux 22 à 28, la carte multiplex 36 assemble tout d'abord les bits fournis par certains des terminaux 12 à 17 (ceux reliés à des canaux dits actifs) en groupes de N-bits. Pour une transmission à un taux global de 14 400 bps, on groupera par exemple les bits par six (N = 6), chaque groupe (N-bits) constituant un «sixbit». La composition de chaque sixbit, ou autrement dit l'ordre dans lequel les bits sont disposés au sein d'un N-bit, est prédéterminé en fonction de la configuration des canaux actifs choisie. Le tableau ci-dessous représente la composition du sixbit pour cinq configurations possibles. On notera que pour chaque configuration de canaux, l'ordre dans lequel les bits sont disposés au sein d'un sixbit peut être modifié par l'homme de l'art sans incidence sur le principe de l'invention. Ce qui importe, c'est que cet ordre soit préalablement défini pour que le démultiplexage puisse se faire correctement à la réception.

Tableau

| Configuration de canaux | canal actif | Débit canal actif (bps) ou DTE Rattaché | Affectation sixbits | | | | | |
|---|---|---|---|---|---|---|---|---|
| | | | Q1 | Q2 | Q3 | Q4 | Q5 | Q6 |
| 1 | A | 14 400 | x | x | x | x | x | x |
| 2 | A | 12 000 | x | x | x | x | x | x |
| | B | 2 400 | | | | | | |
| 3 | A | 9 600 | x | x | | x | x | |
| | B | 4 800 | | | x | | | x |
| 4 | A | 7 200 | | | | x | x | x |
| | B | 4 800 | | x | x | | | |
| | C | 2 400 | x | | | | | |
| 5 | A | 2 400 | | | | | | x |
| | B | 2 400 | | | | | x | |
| | C | 2 400 | | | | x | | |
| | D | 2 400 | | | x | | | |
| | E | 2 400 | | x | | | | |
| | F | 2 400 | x | | | | | |

Supposons qu'à un instant donné, le système fonctionne selon la configuration 4, autrement dit seuls les canaux A, B et C sont actifs. Le canal A opère à une cadence de 7200 bps; le canal B à 4800 bps et le canal C à 2400 bps. Chacune de ces cadences est contrôlée par une horloge (non représentée). La transmission se fait à une vitesse globale apparente de 14 400 bps. Cela signifie que durant un temps baud, le multiplexeur 36 devra recueillir trois bits du terminal DTE 12 opérant à 7200 bps et relié au canal A, deux bits du terminal 13 opérant à 4800 bps et relié au canal B et un bit du terminal 14 travaillant à 2400 bps et relié au canal C. Ces six bits sont prélevés en sortie du multiplexeur pour être transmis toutes les 1/2400 seconde (temps baud) au modem 38 où ils servent à identifier un symbole, lequel symbole est transmis par modulation d'amplitude de deux porteuses en quadrature (modulation DSB–QS). Ceci revient à dire qu'un symbole représentant un «sixbit» est transmis sur la ligne 32 à intervalles réguliers aux instants dits de signalisation. Les instants de signalisation sont espacés entre eux de 1/2400 seconde. L'onde analogique transmise sur la voie 32 est donc porteuse d'information à ces instants de signalisation. A la réception, le modem 42 échantillonne l'onde reçue pour en extraire l'information qu'elle contient, traite cette information pour identifier le symbole et donc le sixbit reçu, puis oriente les bits vers les terminaux (DTE) destinataires respectifs par démultiplexage.

A l'émission, les opérations de modulation étant realisées par un microprocesseur programmé doivent s'enchaîner entre elles selon un ordre préetabli. En d'autres termes, le transfert d'un sixbit de la carte multiplex 36 au modem 38 ne peut s'effectuer que lorsque le processeur est disponible pour ce genre d'opération (dite opération d'entrée/sortie). En pratique, le microprogramme régissant les opérations du processeur comporte une instruction «LECTURE DONNEES A TRANSMETTRE». Cette instruction est répétée à intervalle régulier, ce qui, compte tenu du cycle de base du microprocesseur, devrait permettre d'effectuer les opérations entrée/sortie au rythme baud. L'exécution de l'instruction «LECTURE DONNEES A TRANSMETTRE» définit de manière précise l'instant de signalisation, c'est-à-dire l'instant auquel un sixbit doit être transferré de la carte multiplex 36 au modem 38.

Donc d'une part les terminaux actifs fournissent des bits à des rythmes qui leurs sont propres pour construire chaque sixbit et d'autre part le microprocesseur prend ce sixbit en charge à son propre rythme. Bien que les rythmes des terminaux fournissant des bits et le rythme du processeur prenant le sixbit soient liés entre eux (temps bits/temps baud), il y a asynchronisme entre ces deux types d'opérations. Les risques de malfonctionnement du dispositif dûs à cet asynchronisme sont minimisés par l'emploi des moyens dits de tampon élastique de la présente invention.

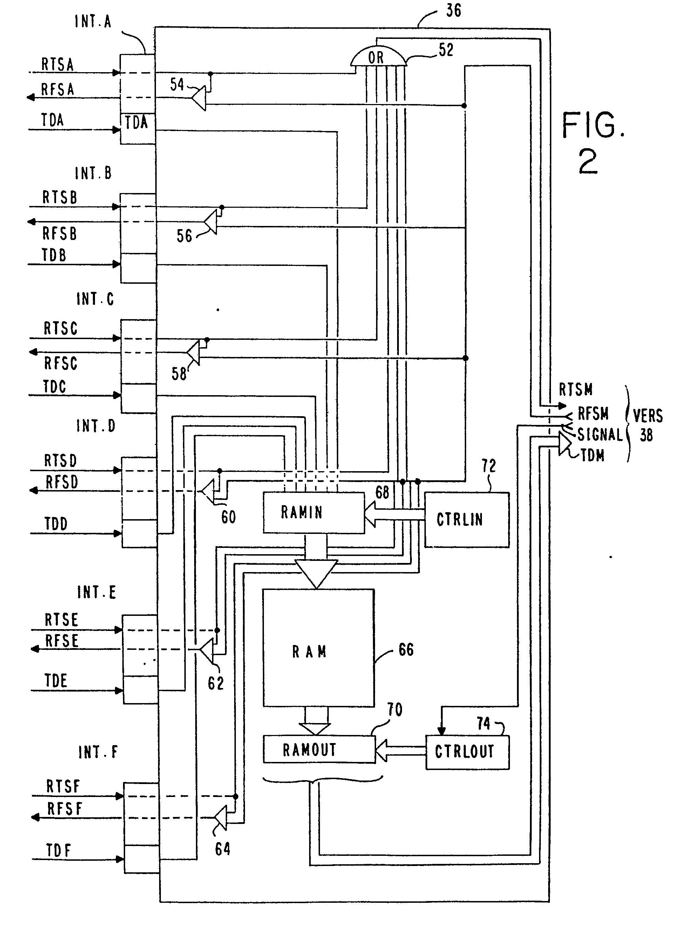

La figure 2 représente un schéma général montrant le dispositif de l'invention au sein de la carte multiplex 36. Avant d'en entreprendre la description, on rappellera tout d'abord les définitions de certaines lignes d'interface de type V 24 du CCITT, à savoir:

TD (Emission de Données):

Les données issues du DTE et à transmettre sont transférées au modem par cette ligne.

RTS (Demande pour Emettre)

Cette ligne est utilisée par le DTE pour mettre initialement le modem en état d'émettre.

RFS (Prêt à Emettre):

Cette ligne est utilisée par le modem pour indiquer initialement au DTE qu'il est en mesure d'émettre.

Pour distinguer les lignes de jonction V24 en fonction du canal auquel elles appartiennent, on a rajouté les suffixes A, B, C, D, E ou F. Par exemple, la ligne RFS du canal A est désignée par RFSA, etc. . . En outre, on a désigné par INT.A, l'interface de type V24 associé au canal A, par INT.B celui associé au canal B, et ainsi de suite. Enfin, on a réservé le suffixe M à la ligne (ou l'ensemble de ligne dans le cas de TDM) reliant la carte multiplex 36 au modem 38.

Conformément à la procédure CCITT, à l'initialisation du système de transmission, la ligne RTS du canal désirant émettre doit être portée de zéro volt à un niveau prédéterminé de tension positive (niveau haut). Plus précisément, un dispositif (non représenté) définit, en fonction de la configuration de canaux actifs choisie et en se basant sur le tableau représenté plus haut, quelles sont, parmi les lignes RTSA, RTSB, RTSC, RTSD, RTSE et RTSF, celles dont la tension doit passer au niveau haut. L'indication de ce passage au niveau haut est communiquée au modem 38 à travers un circuit OU logique 52 et la ligne RTSM qui en sort. Dès qu'il est en mesure de passer en mode actif pour transmettre, le modem 38 porte la tension de la ligne RFSM au niveau haut. Mais grâce à l'utilisation de portes logiques 54, 56, 58, 60, 62 et 64, seuls les canaux actifs dont la ligne RTS est haute voient le niveau de tension de leur ligne RFS s'élever. Le système de transmission est alors en mesure de fonctionner, à commencer par la construction et la gestion des sixbits. A cet effet, la carte multiplex a été dotée d'une mémoire à accès aléatoire (RAM) 66 associée à des moyens d'entrée de mémoire (RAM IN) 68 et de sortie (RAM OUT) 70 eux mêmes respectivement commandés par des moyens de commande d'entrée (CTRLIN) 72 et de sortie (CTRLOUT) 74. Les lignes TDA, TDB etc. . . véhiculant les bits de données provenant des terminaux 12 à 17 sont reliées aux moyens d'entrée de mémoire 68. Le dispositif (non représenté) de sélection de canaux actifs agit pour n'orienter vers les entrée de la mémoire que les lignes de type TD associées auxdits canaux actifs. Le moyen de commande 72 sera chargé d'orienter les bits des canaux actifs vers les positions de la mémoire 66 qui leur auront été assignées.

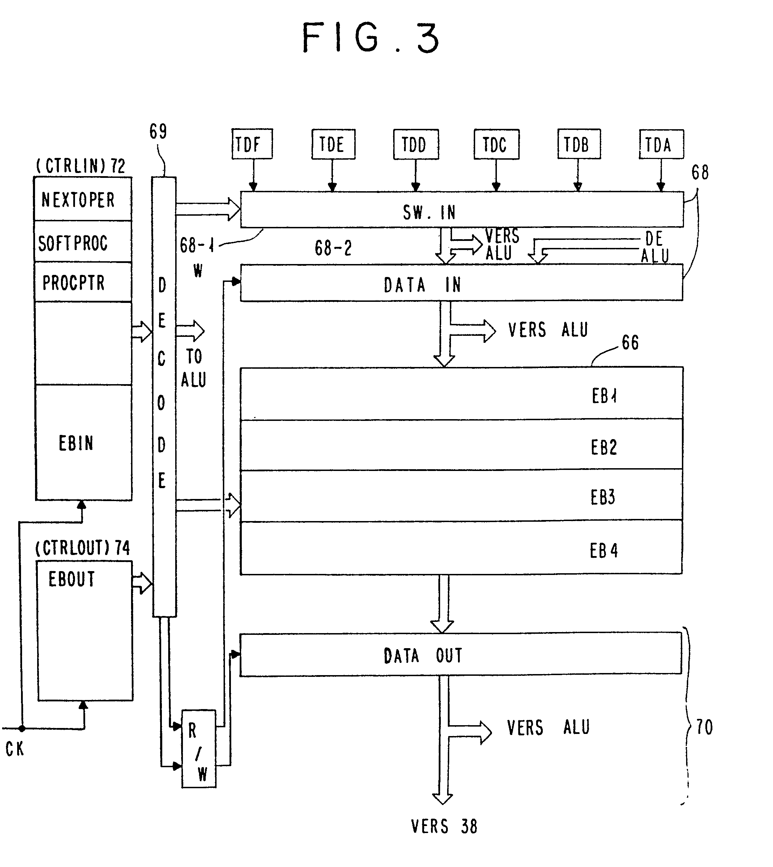

Autrement dit, les bits de données sont fournis par les terminaux actifs aux instants définis par des horloges (non représentées) desservant ces terminaux. Pour plus de précision sur le système d'horloges on pourra se reporter à la demande de brevet européen EP-A-0 124 674 déposée par la demanderesse le 27 avril 1983 sous le titre: «Procédé de synchronisation de l'émetteur d'un système de transmission numérique et dispositif de mise en œuvre dudit procédé». Sous la commande de ces horloges, les bits de données sont stockés dans les positions TDA, TDB (voir Fig. 3) appartenant aux interfaces INT.A, INT.B, etc... correspondant aux terminaux actifs. D'autre part, les opérations du modem sont régies par un programme dans lequel le programmeur prévoit des interruptions pour lecture des cellules de bits TDA, TDB; ... des canaux actifs. Durant ces interruptions, le programmeur aura mis dans ledit programme une instruction de lecture dite READ TDX, avec X = A, B, C, D, E ou F. L'ordre et la fréquence d'apparition de ces instructions dans le programme dépendent des caractéristiques des canaux choisis pour être actifs. A titre d'exemple, si la 4ème configuration de canaux actifs est choisie, le canal A fonctionnera à 7200 bps, B à 4800 bps et C à 2400 bps.

Durant un intervalle de temps correspondant à 1 baud, l'instruction READ TDA apparaîtra 3 fois, READ TDB 2 fois et READ TDC 1 fois.

La figure 3 schématise un mode de réalisation du dispositif tampon de l'invention. Le fonctionnement du dispositif de la figure 3 comporte une période d'initialisation et une periode de fonctionnement. La période d'initialisation est plus ou moins complexe selon que l'on aura ou pas prévu un ensemble de moyens de commande (CTRLIN) 72 pour chacune des configurations de canaux actifs prévues (voir tableau plus haut). Quant au fonctionnement du dispositif tampon en temps réel, il est basé sur les principes suivants: toutes les lignes de la mémoire 66 ayant été initialement chargés par un octet (byte) 00 111 111, aucune écriture mémoire n'est à effectuer si le bit reçu du terminal actif (stocké dans la cellule TD) est égal à 1; par contre si ce bit reçu est égal à zéro, le bit de la cellule de mémoire concernée doit être inversé. (Remarque: on pourrait initialiser la mémoire 66 à zéro, aucune écriture mémoire n'est à effectuer si le bit reçu du terminal actif est égal à 0; par contre si ce bit reçu est égal à 1, le bit de la cellule de mémoire concernée doit être inversé).

Les bits de données des terminaux actifs sont orientés vers les positions de bits du sixbit auxquelles ces bits sont destinés, grâce à un dispositif de commutation (SWIN) 68–1 commandé par programme et décodé en (DECODE) 69. A chaque instant bit, le registre SW.IN ne contient donc qu'un bit significatif qui peut être testé pour identification par exemple dans une unité arithmétique et logique ALU (non représentée). La sortie du dispositif de commutation 68–1 est aussi reliée à l'entrée d'un registre 68–2 dont la sortie est reliée à la fois à l'ALU et à la mémoire 66. Dans l'exemple choisi, la mémoire 66 comporte K = 4 lignes dont les adresses sont EB1, EB2, EB3 et EB4, et huit colonnes. Deux colonnes seront inutilisées comme on le verra plus loin, mais elles servent à normaliser tous les registres utilisés à la longueur d'un octet. Chaque mot extrait de la mémoire est placé dans un registre de sortie (DATA OUT) appartenant au dispositif 70.

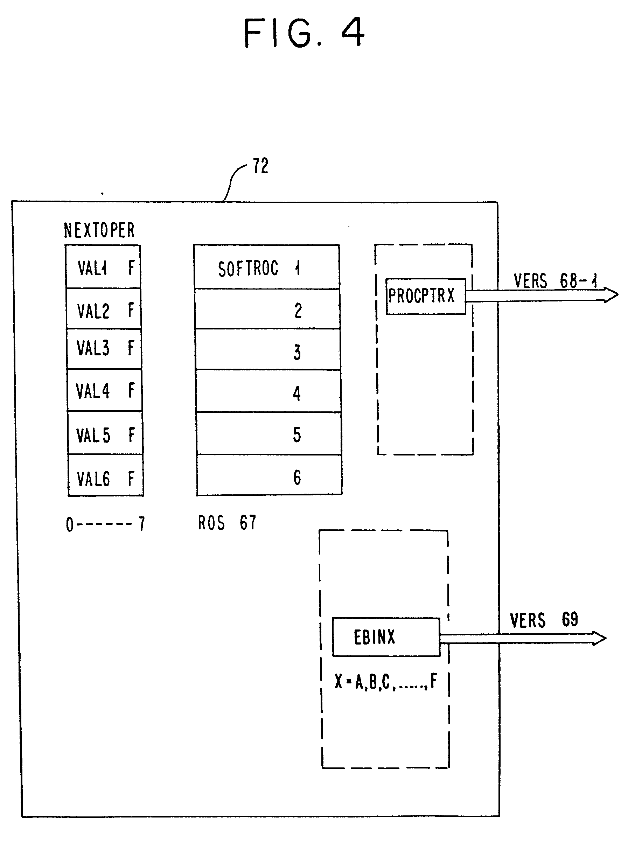

L'ensemble du dispositif décrit ci-dessus est géré par des microprogrammes appartenant aux moyens de commande 72 (voir figure 4) et 74. Les instructions sont extraites des moyens de commande 72 et 74 au rythme d'une horloge CK (non représentée), rythme nettement supérieur au rythme maximum d'arrivée des bits de données des DTE. Ces instructions sont décodées en 69.

Les microprogrammes cités ci-dessus gèrent notamment des moyens d'adressage de colonne d'entrée comprenant des pointeurs de colonne (PROCPTR); des moyens d'adressage de ligne d'entrée comprenant des pointeurs de ligne d'entrée EBIN et des moyens d'adressage de ligne de sortie EBOUT.

A chaque canal (ou source) d'entrée actif est associé un desdits pointeurs de type PROCPTR, soit PROCPTRA, PROCPTRB, etc... La gestion de chaque pointeur de type PROCPTR est confiée à un ou plusieurs microprogramme(s) SOFTPROC 1 à SOFPROC 6 et à une table dite NEXTOPER contenant des termes dits «valeurs» (VAL). L'ensemble des microprogrammes ou routines de gestion est conservé dans la mémoire de microprogrammes 67.

Un pointeur de ligne d'entrée de type EBIN est associé à chaque canal d'entrée. Les pointeurs désignés par PROCPTRA à PROCPTRF et par EBINA à EBINF appartiennent aux moyens de commande d'entrée 72 et définissent des moyens d'adressage de colonne et de ligne d'entrée.

Les signaux commandant lecture (R) et écriture (W) dans la mémoire 66 sont engendrés par un dispositif R/W commandé par le décodeur 69.

A chaque instant de signalisation défini par le microprocesseur du modem 38, le dispositif de commande de sortie 74, ordonne le transfert du contenu d'une ligne de la mémoire 66 dans le registre de sortie 70. La position de cette ligne est définie par moyen d'adressage de ligne de sortie contenant un pointeur EBOUT. En pratique, seuls les 6 bits les plus à droite de chaque ligne de mémoire seront conservés et formeront un sixbit. D'ailleurs, les opérations d'emmagasinage des bits de données dans la mémoire à accès aléatoire 66 ne concerneront que ces 6 bits de droite.

Pour faciliter la compréhension du fonctionnement du système de l'invention, on va le décrire pour deux des configurations de canaux actifs prévues au tableau.

1er exemple: configuration de canaux 5:

Tous les canaux sont actifs et les terminaux auxquels ils sont rattachés fonctionnent à 2400 bps. Chaque terminal ou canal doit fournir un bit Q1 à Q6 de chaque sixbit. Plus précisément le canal A fournit le bit Q6, le canal B le bit Q5, et ainsi de suite jusqu'au terminal F qui fournit Q1.

Une fois cette configuration définie, le microprogramme gérant le système de l'invention (microprogramme non représenté de gestion de la carte multiplex 36) commande des opérations dites d'initialisation. La mémoire 66 est adressée de EB1 à EB4 et chacune des lignes correspondantes est initialisée avec la valeur en bits «00 111 111». Cette opération est en fait facultative comme on le verra plus loin. Elle présente cependant certains avantages, notamment celui de faciliter le fonctionnement du modem en mode dit à porteuse continue (continuous carrier) correspondant à la transmission d'une séquence ne comportant que des bits de valeur 1, séquence transmise par répétition du symbole correspondant au sixbit 111 111. On notera ultérieurement d'autres avantages d'une telle initialisation. La deuxième opération d'initialisation consiste à charger l'adresse EB3 dans chacun des registres de pointeurs d'entrée EBINA à EBINF, tandis que l'adresse EB1 est chargée dans le registre de pointeur de sortie EBOUT. L'écart entre les adresses EB1 et EB3 détermine l'importance du tampon élastique. On peut modifier cet écart en modifiant les adresses des pointeurs chargés initialement dans les registres de pointeurs d'entrée et de sortie ainsie qu'en modifiant la capacité (nombre de lignes) de la portion de mémoire RAM 66 assignée aux fonctions de tampon élastique de l'invention.

L'initialisation du système comporte aussi un chargement des registres ou lignes de table NEXTOPER. Il s'agit là de six registres de un octet chacun. Les bits zéro à six sont chargés d'une information dite de «valeur» et que l'on désignera par VAL 1 pour le premier des six registres de la table de valeurs NEXTOPER, VAL 2 pour le deuxième et ainsi de suite. Ces «valeurs» sont destinées à remplacer le contenu des pointeurs PROCPTRA à PROCPTRF après exécution des micro-routines de programme pointées par PROCPTRA à PROCPTRF. Les champs de «valeurs» (VAL) sont initialisés de manière à adresser les routines SOFTPROC 1 à SOFTPROC 6. Le huitième bit de chaque registre NEXTOPER est un bit de drapeau (F) qui dans le cas du présent exemple est mis à l'état logique 1. Dans le cas de configuration de six canaux à 2400 bps, VAL 1 contiendra l'adresse permettant de pointer sur une routine SOFTPROC 1 préalablement enregistrée dans une mémoire permanente (ROS) 67; VAL 2 pointera sur une routine SOFTPROC 2 de la mémoire 67; VAL 3 sur SOFTPROC 3 et ainsi de suite jusqu'à VAL 6 qui pointera sur SOFTPROC 6.

Enfin, les opérations d'initialisation comportent aussi un chargement des six registres de un byte chacun désignés par PROCPTRA à PROCPTRF. Ces registres contiennent chacun l'adresse d'un microprogramme ou routine SOFTPROC 1 à SOFTPROC 6 emmagasiné dans la mémoire inaltérable (ROS) 67. Chacun de ces microprogrammes commande les opérations destinées à stocker les bits de données dans les positions de la mémoire 66 pointées par EBINA à EBINF. Le registre PROCPTRA contient, à l'initialisation, la valeur SOFTPROC 1; PROCPTRB la valeur SOFTPROC 2, et ainsi de suite.

Une fois initialisé, le système peut opérer en temps réel. Autrement dit, comme le montre la configuration 5 du tableau de composition des sixbits, chaque terminal doit dans le cas présent fournir un bit du sixbit. Imaginons que le bit de données considéré provienne du canal A. Dans ce cas, les opérations sont commandées par la routine SOFTPROC 1 adressée par le pointeur PROCPTRA. Cette routine commence par déterminer la valeur binaire du bit de donnée à mettre en mémoire 66. Cette opération dite de test est réalisée par passage du bit dans l'unité ALU (non représentée). Si ce bit de donnée est égal à zéro, la routine provoque l'exécution (dans l'unité ALU) d'une fonction OU exclusif entre un byte «00 000 001» et le contenu de la ligne d'adresse EB3 de la mémoire 66 vers laquelle pointe le pointeur EBINA. Le contenu de l'adresse EB3 de la mémoire 66 aura donc été au préalable transferré dans l'unité ALU par lecture de la mémoire (R). Ensuite, le byte VAL 1 du bloc de registre NEXTOPER remplace le contenu du registre pointeur PROCPTRA. (Dans le cas présent, la nouvelle valeur de pointeur est identique à l'ancienne puisque à chaque terminal actif est attribué une seule position de bit du sixbit, donc une seule position de bit du registre d'entrée 68. Donc le contenu du pointeur PROCPTRA ne varie pas). La routine SOFTPTRA commande ensuite le test du bit d'ordre 7 ou bit drapeau (F) du registre NEXTOPER contenant la valeur 1 (VAL 1). Comme dans le cas présent, le bit F = 1, la routine SOFTPTRA augmente d'une unité le contenu du registre pointeur EBINA en vue d'une préparation au traitement du bit suivant en provenance du même canal A.

Par contre, si le bit de donnée en provenance du canal A était égal à un, la routine SOFTPRA n'aurait effectué aucun changement au contenu de la mémoire 66. Quant aux contenus des registres PROCPTRA et EBINA, ils auraient aussi été mis à jour comme indiqué ci-dessus pour un bit de donnée égal à zéro.

Imaginons maintenant que le bit de données provienne du canal B, les opérations sont semblables à celles décrites ci-dessus. Toutefois, la valeur NEXTOPER mise en jeu, est celle portant la référence «VAL 2». Enfin, il est évident que ce sont, dans le cas du canal B, les pointeurs EBINB et PROCPTRB ainsi que la routine SOFTPROC 2 qui interviennent dans le processus mis en jeu. Cette routine diffère de SOFTPROC en ce que l'octet à soumettre à la fonction OU-Exclusif, si le bit d'entrée sur le canal B est nul, est maintenant «00 000 010» au lieu de «00 000 001».

Les mêmes opérations sont répétées pour les canaux C à F avec des octets destinés à la fonction OU-Exclusif qui sont respectivement 00 000 100; 00 001 000; 00 010 000; 00 100 000.

Enfin, à l'instant de signalisation défini par le processeur du modem, le contenu d'une ligne de mémoire 66, vers laquelle pointe le registre EBOUT (soit la ligne d'adresse EB1 pour commencer) est transferré dans le registre de sortie DATA OUT ou registre d'émission 70. Le contenu de EBOUT est augmenté d'une unité, tandis qu'un octet «00 111 111» est remis dans la ligne de mémoire 66 qui vient d'être lue. Avant transmission au microprocesseur du modem, seuls les 6 bits les plus à droite du registre de sortie 70 sont conservés pour former un sixbit.

Dans le cas décrit ici, c'est-à-dire lorsque seules quatre lignes de la mémoire à accès aléatoire (RAM) sont réservées aux fonctions de tampon élastique, les registres pointeurs EBIN et EBOUT ne peuvent contenir que l'une des quatre adresses de mémoire 66, soit EB1, EB2, EB3, EB4. Après l'adresse EB4, le contenu du pointeur repasse à l'adresse EB1. L'incrémentation du contenu du pointeur est particulièrement intéressante lorsque le nombre de lignes de la mémoire 66 est une puissance de 2 et que le pointeur est lui-même un registre d'un nombre de bits égal à cette puissance de 2.

Deuxième exemple: configuration de canaux 4:
Autrement dit
Canal A à 7200 bps.
Canal B à 4800 bps.
Canal C à 2400 bps.

Le tableau de configurations de canaux montre que le sixbit doit maintenant contenir un bit (Q1) du canal C, suivi de deux bits (Q2, Q3) du canal B et trois bits (Q4, Q5, Q6) du canal A. Ce qui correspond à un sixbit de type ĈBBAAA. Les canaux D, E et F sont donc inactifs.

De même que pour l'exemple précédent, une fois définie la configuration de canaux actifs, le microprogramme de gestion de la carte multiplex 36 commande des opérations d'initialisation. Chaque ligne de la mémoire 66 reçoit un octet 00 111 111. Le contenu de chacun de trois registres pointeurs de canaux actifs, soit EBINA, EBINB et EBINC est remplacé par la première adresse de mémoire 66 à charger, c'est-à-dire EB3 pour l'exemple choisi. Quant au pointeur de sortie EBOUT, on le fait pointer sur l'adresse EB1 pour commencer. Les six registres NEXTOPER (portant les références NEXTOPER 1 à 6) sont chargés pour adresser respectivement:

— NEXTOPER 1 : VAL 1 = adresse début routine SOFTPROC 2 et F = 0.
— NEXTOPER 2 : VAL 2 = adresse début routine SOFTPROC 3 et F = 0.
— NEXTOPER 3 : VAL 3 = adresse début routine SOFTPROC 1 et F = 1.
— NEXTOPER 4 : VAL 4 = adresse début routine SOFTPROC 5 et F = 0.
— NEXTOPER 5 : VAL 5 = adresse début routine SOFTPROC 4 et F = 1.
— NEXTOPER 6 : VAL 6 = adresse début routine SOFTPROC 6 et F = 1.

Enfin, les registres de pointeurs PROCPTR sont chargés comme suit:
— PROCPTRA pointe sur la routine SOFTPROC 1.
— PROCPTRB pointe sur la routine SOFTPROC 4.
— PROCPTRC pointe sur la routine SOFTPROC 6.

On notera toutefois que les opérations de chargement des registres NEXTOPER ainsi que le chargement initial des registres pointeurs PROCPTR peuvent être réalisés indépendamment de l'initialisation proprement dite. Il suffit pour cela de prévoir un jeu de registres PROCPTR et NEXTOPER préchargés pour chacune des configurations de canaux actifs possibles.

Une fois l'initialisation terminée, le fonctionnement du dispositif de l'invention peut à nouveau démarrer en temps réel.

Pour le premier bit de données provenant du canal A, la commande des opérations à effectuer est confiée au microprogramme SOFTPROC 1 vers lequel pointe PROCPTRA. Ce microprogramme détermine tout d'abord la valeur du bit de données reçu. Si ce bit est égal à zéro, une fonction OU-Exclusif est effectuée entre un byte «00 000 001» et le contenu de la mémoire 66 vers laquelle pointe le pointeur EBINA. Si, au contraire, le bit de données était égal à un, le contenu de la mémoire 66 vers laquelle pointait le pointeur EBINA n'aurait pas été modifié. Ensuite, la valeur VAL 1 adressant la routine SOFTPROC 2 contenue dans le premier registre NEXTOPER est transferrée dans le registre PROCPTRA. Un test du bit drapeau F du premier registre NEXTOPER est exécuté. Comme F = 0, le système sort de la routine. Pour le deuxième bit de donné provenant du canal A, à l'instant défini par le programme de gestion de la cellule TDA, c'est-à-dire environ toutes les 1/7200 seconde, la commande des opérations à effectuer est confiée au microprogramme SOFTPROC 2 vers lequel pointe le pointeur PROCPTRA. Les opérations effectuées sont semblables à celles exécutées pour le premier bit du canal A. A ceci près que le byte destiné à être soumis à la fonction OU-Exclusif est maintenant égal à «00 000 010». La valeur (VAL 2) contenue dans le second registre NEXTOPER est transferrée dans le registre pointeur PROCPTRA.

Pour le troisième bit du canal A, la commande des opérations est confiée au pointeur PROCPTRA. Les opérations exécutées sont les mêmes que celles qui concernaient le deuxième bit du canal A, toujours au byte du OU-Exclusif près qui est maintenant «00 000 100». A la fin de la routine considérée, la valeur VAL 3, soit l'adresse du début de routine SOFTPROC 1 contenue dans le troisième registre NEXTOPER est transferrée dans le registre pointeur PROCPTRA. Par contre, le test du drapeau F montrant que F = 1 provoque l'addition de un au contenu du registre EBINA, lequel contenu devient donc EB4.

Pour le premier bit de donnée provenant du canal B, la commande des opérations à effectuer est confiée au microprogramme (routine) SOFTPROC 4 vers lequel pointe le pointeur PROCPTRB. Ce microprogramme commence par détecter la valeur du bit de donnée. Si ce bit est égal à zéro, une fonction OU-Exclusif est réalisée entre un byte «00 001 000» et le contenu de la ligne de mémoire 66 vers laquelle pointe EBINB, soit EB3 pour commencer. Si au contraire, le bit de donné est égal à «1», le contenu de la ligne de mémoire vers laquelle pointe EBINB n'est pas à modifier. Puis la valeur VAL 4 du quatrième registre NEXTOPER est transferrée dans le registre pointeur PROCPTRB. Suit un test du bit drapeau du quatrième registre NEXTOPER, ce bit étant égal à zéro, on sort de la routine.

Pour le second bit du CANAL B, la commande des opérations est confiée à la routine du microprogramme SOFTPROC 5 vers laquelle pointe le pointeur PROCPTRB. Les opérations qui s'effectuent sont semblables à celles exécutées pour le premier bit du canal B (toujours au byte du OU-Exclusif près qui devient 00 010 000). Toutefois, à la sortie de ladite routine, la valeur VAL 5 du cinquième registre NEXTOPER remplace le contenu du registre pointeur PROCPTRB. De plus comme le drapeau F = 1, le contenu du registre EBINB est augmenté d'une unité. Il devient donc égal à EB4.

Pour le premier bit du canal C, la commande des opérations est confiée à la routine de microprogramme SOFTPROC 6. Les opérations à effectuer sont les mêmes que celles concernant le dernier bit du canal B (mais avec un byte pour OU-Exclusif maintenant égal à 00 100 000). Toutefois, en sortie de routine, SOFTPROC 6 reste inchangé dans le registre pointeur PROCPTRC puisque la valeur VAL 6 pointe sur la routine SOFTPROC 6. De plus comme le drapeau F = 1, le contenu du registre EBINC est augmenté d'une unité. Il devient donc égal à EB4.

A l'instant de signalisation défini par le modem, les opérations effectuées pour ce deuxième exemple de fonctionnement sont les mêmes que celles décrites à propos du premier exemple de fonctionnement de l'invention.

La description qui précède montre que l'invention permet d'adapter le dispositif tampon élastique de la carte multiplex à tous les types de configurations de canaux d'entrée prévus. Le passage d'une configuration à une autre peut se faire très simplement grâce à l'utilisation du dispositif de commande logique comprenant notamment une série de microprogrammes propres à chaque configuration et des moyens qui, une fois définie la configuration de canaux à utiliser, choisissent et mettent en place les microprogrammes correspondants. Plus précisément, quelle que soit la configuration, le contenu de la mémoire (ROS) 67 contenant les routines de gestion des bits des canaux d'entrée, peut rester le même. Cette mémoire est donc commune à toutes les configurations. De même, la mémoire (RAM) 66 ainsi que son microprogramme d'initialisation à l'aide d'octets «00 111 111», peut aussi être commune à toutes les configurations. Par contre, le contenu des registres pointeurs EBIN, EBOUT et PROCPTR, ainsi que celui de la table de valeurs NEXTOPER sont fonction de la configuration de canaux d'entrée et/ou de l'élasticité choisie. Pour une élasticité donnée, on pourra prévoir des moyens permettant de charger les registres pointeurs EBIN et PROCTPTR ainsi que les registres de la table de valeurs NEXTOPER pour chacune des configurations prévues sur le tableau de configurations. Naturellement, une autre possibilité réside dans l'utilisation pour chaque configuration de canaux d'un jeu de registres pré-chargés aux valeurs initiales.

La souplesse du dispositif de l'invention provient aussi du fait que les dimensions du dispositif tampon élastique peuvent être modifiées très simplement notamment par extension de la zone de mémoire 66 réservée à cet effet. En particulier, lorsqu'il s'agit simplement de modifier l'écart entre les lignes d'entrée et sortie de la mémoire 66, il suffit de corriger les contenus initiaux des jeux de pointeurs EBIN et EBOUT, ainsi que les limites «K» des adresses EB balayées par ces registres pointeurs.

## Revendications

1. Dispositif tampon destiné à assurer une fonction d'interface entre plusieurs sources actives de données binaires fournissant chacune des bits à une cadence qui lui est propre, et un dispositif de prélèvement desdits bits par groupe de N-bits (ou (N-bit) ) au sein duquel les bits sont disposés selon un ordre prédéterminé, ledit dispositif tampon comportant:

— une mémoire à accès aléatoire (66) à K lignes et au moins N colonnes;

— des moyens d'adressage de ligne d'entrée (EBINX) définissant, la ligne de mémoire à accès aléatoire destinée à recevoir les bits fournis les sources;

— des moyens d'adressage de ligne de sortie (EBOUT) définissant la ligne de mémoire à accès aléatoire destinée à fournir un N-bit au dispositif de prélèvement;

— des moyens d'initialisation chargeant les adresses initiales d'entrée et de sortie dans les moyens d'adressage de lignes d'entrée et de sortie;

— des moyens de sortie (70) reliés au dispositif de prélèvement de N-bits, lesdits moyens de sortie étant destinés à être chargés par les bits contenus dans les positions de la ligne de mémoire à accès aléatoire adressées par lesdits moyens d'adressage de ligne de sortie;

— des moyens de commande de sortie (74) incrémentant les adresses fournies auxdits moyens d'adressage de sortie de manière cyclique et au rythme du dispositif de prélèvement;

ledit dispositif tampon étant en outre caractérisé en ce qu'il comporte:

— des moyens d'adressage de colonne d'entrée (PROCPTRX) adressant la (les) colonne(s) de la mémoire assignée(s) à chacune des sources actives selon un ordre prédéterminé en fonction de la distribution des bits au sein d'un N-bit;

— des moyens de commande d'entrée (ROS 67, NEXTOPER) reliés aux moyens d'adressage de colonne d'entrée de mémoire aléatoire et incrémentant les adresses fournies auxdits moyens d'adressage d'entrée selon des ordres prédéterminés et cycliques et à des rythmes définis par les cadences propres aux sources.

2. Dispositif tampon selon la revendication 1 caractérisé en outre, en ce que l'écart entre les adresses initiales chargées dans lesdits moyens d'adressage de lignes d'entrée et de sortie est préalablement défini en fonction des caractéristiques desdites sources et dudit dispositif de prélèvement de N-bits.

3. Dispositif tampon selon la revendication 2, caractérisé en outre en ce que lesdits moyens d'adressage de ligne d'entrée comportent un registre dit pointeur d'entrée (PROCPTR) assigné à chacune desdites sources actives.

4. Dispositif tampon selon l'une quelconque des revendications 1 à 3 caractérisé en outre en ce que lesdits moyens d'adressage de colonne d'entrée comportent:

— une mémoire de microprogrammes (67) contenant N routines de gestion, chacune desdites routines étant destinée à gérer les opérations d'emmagasinage dans la mémoire aléatoire, d'un des bits d'entrée défini en fonction de sa position au sein du N-bit;

— un registre pointeur d'entrée (PROCPTR) assigné à chacunes desdites sources actives, chacun des dits registres pointeurs d'entrée étant destiné à recevoir une valeur représentant l'adresse de début d'une routine de la mémoire de microprogramme;

— un ensemble de N registres de mise à jour (NEXTOPER);

— des moyens de balayage pour balayer les registres de mise à jour à la cadence de l'entrée des bits dans la mémoire à accès aléatoire; et,

— des moyens de transfert pour changer le contenu de chacun des registres pointeurs d'entrée en fonction du contenu des registres de mise à jour sous la commande desdits moyens de balayage.

5. Dispositif tampon selon la revendication 4, caractérisé en outre en ce que chacun des registres de mise à jour contient une position de bit dit de drapeau dont la valeur binaire commande l'opération desdits moyens de transfert.

6. Dispositif tampon selon la revendication 5, caractérisé en outre en ce que chacune des positions de la mémoire à accès aléatoire destinée à recevoir un bit de N-bit est initialement chargée par une valeur binaire égale à 1.

7. Dispositif tampon selon la revendication 6, caractérisé en outre en ce que l'entrée dans la mémoire à accès aléatoire d'un bit de donnée en provenance d'une source est réalisée par une opération OU-Exclusif entre le contenu de la ligne de mémoire adressée par lesdits moyens d'adressage de ligne d'entrée et un mot défini par la routine de gestion vers laquelle pointe le registre pointeur d'entrée concerné.

8. Système de transmission de données dans lequel les bits de données en provenance d'au moins une source de données rattachée à au moins un canal d'entrée dit actif sont destinés à être prélevés pour être transmis par un dispositif de transmission fonctionnant de manière asynchrone par rapport aux cadences d'arrivée des bits en provenance des sources de données, ledit système étant caractérisé en ce qu'il comporte un dispositif tampon selon l'une des revendications 1 à 7 placé entre les canaux d'entrée et ledit dispositif de prélèvement de N-bits, chacun desdits N-bits prélevés étant transferré ver le dispositif de prélèvement à des instants définis par ledit dispositif de prélèvement.

9. Système de transmission de données selon la revendication 8, caractérisé en ce que ledit dispositif de transmission appartient à un multiplexeur.

10. Système de transmission de données selon la revendication 9, caractérisé en ce que la sortie dudit multiplexeur est connectée à l'entrée d'un modem opérant selon les techniques dites DSB-QC.

11. Système de transmission selon la revendication 10, caractérisé en outre en ce que chaque N-bit est utilisé pour définir un symbole transmis par le modulateur du modem à un rythme dit rythme baud lequel rythme baud détermine le rythme de prélèvement des N-bits à la sortie du dispositif tampon.

12. Système de transmission de données selon la revendication 11 caractérisé en ce que les instants précis auxquels les moyens de commande de sortie transfèrent un N-bit de la mémoire à accès aléatoire vers le modem sont définis par le programme de traitement du signal commandant les opérations d'un microprocesseur du modem.

13. Système de transmission de données selon la revendication 13 caractérisé en outre en ce que plusieurs configurations possibles de canaux actifs sont prévues et que pour chacune desdits configurations est prévu un dispositif tampon réalisé selon l'une des revendications 1 à 7.

14. Système de transmission de données selon la revendication 12 ou 13, caractérisé en outre en ce qu'il comporte des moyens pour faire varier l'élasticité du dispositif tampon, lesdits moyens comprenant:

— des moyens de modification du nombre de lignes de la mémoire à accès aléatoire; et,

— des moyens de modification de l'écart entre les valeurs des adresses initiales chargées dans lesdits moyens d'adressage de lignes d'entrée et de sortie.

**Patentansprüche**

1. Puffervorrichtung, dafür bestimmt, eine Schnittstellenfunktion zwischen mehreren aktiven Quellen binärer Daten zu gewährleisten, die jeweils in einer eigenen Kadenz Bits liefern, und eine Vorrichtung für die Entnahme der besagten Bits durch eine Gruppe von N-Bits (oder N-Bit), in der die Bits in einer vorgegebenen Ordnung angeordnet sind, wobei besagte Puffervorrichtung enthält:

— einen Speicher mit aleatorischem Zugriff (66) mit K Zeilen und mindestens N Spalten;

– Adressiermittel für die Eingangszeile (EBINX), die die Speicherzeile mit aleatorischem Zugriff definiert, die für die Aufnahme der von den Quellen gelieferten Bits bestimmt ist,

– Mitteln zum Adressieren der Ausgangszeile (EBOUT), die die Speicherzeile mit aleatorischem Zugriff definieren, die für die Abgabe eines N-Bit an die Entnahmevorrichtung bestimmt ist;

– Initialisierungsmittel, die Anfangsein- und Ausgabeadressen in die Adressiermittel der Ein- und Ausgangszeilen laden;

– Ausgabemittel (70), die die N-Bit-Entnahmevorrichtung angeschlossen sind, wobei besagte Ausgabemittel dafür bestimmt sind, durch die in den Positionen der Speicherzeile mit aleatorischem Zugriff, die durch die besagten Adressausgangszeilen Adressiermittel adressiert werden, enthaltenen Bits geladen zu werden..

– Ausgabesteuermittel (74), mit denen die von besagten Ausgabeadressiermitteln gelieferten Adressen zyklisch und im Rhythmus der Entnahmevorrichtung inkrementiert werden, wobei besagte Puffervorrichtung ferner dadurch gekennzeichnet ist, dass sie enthält:

– Mittel zum Adressieren der Eingangsspalte (PROCPTRX), welche die Speicherspalte(n) adressieren, die jeder der aktiven Quellen zugeordnet ist, in einer vorgegebenen Reihenfolge nach der Bit-Verteilung innerhalb eines N-Bit;

– Mittel für die Eingangssteuerung (ORS 67, NEXTOPER), mit den Adressiermitteln der Eingabespalte des aleatorischen Speichers verbunden, die die an die besagten Eingangsadressiermittel gelieferten Adressen nach vorgegebener zyklischer Reihenfolge und in Rhythmen, die durch die den Quellen eigenen Kadenzen definiert sind, inkrementieren.

2. Puffervorrichtung gemäss Anspruch 1, ferner dadurch gekennzeichnet, dass der Abstand zwischen den in die besagten Adressiermittel der Ein- und Ausgabezeilen geladenen Anfangsadressen vorher in Abhängigkeit der Kenndaten der besagten Quellen und der besagten N-Bit-Entnahmevorrichtung definiert ist.

3. Puffervorrichtung gemäss Anspruch 2, ferner dadurch gekennzeichnet, dass die besagten Eingangszeilenadressiermittel ein sogenanntes Eingabezeigerregister (PROCPTR) enthalten, das jeder der besagten aktiven Quellen zugeordnet ist.

4. Puffervorrichtung gemäss einem der Ansprüche 1 bis 3, ferner dadurch gekennzeichnet, dass die besagten Eingangsspalten Adressiermittel enthalten:

– eine Mikroprogrammspeicher (67), der N Verwaltungsroutinen enthält, von denen jede dafür bestimmt ist, die Abspeicherungsvorgänge eines Eingabebits, das in Abhängigkeit von seiner Position im Rahmen des N-Bit definiert ist, im aleatorischen Speicher zu verwalten;

– ein Eingabezeigerregister (PROCPTR), das jeder der besagten aktiven Quellen zugeordnet ist, wobei jedes der besagten Eingabezeigerregister dafür bestimmt ist, einen Wert aufzunehmen, der die Anfangsadresse einer Routine des Mikroprogrammspeichers darstellt;

– eine Einheit von N Berichtigungsregistern (NEXTOPER);

– Abtastmittel zum Abtasten der Berichtigungsregister in der Kadenz der Bit-Eingabe in den Speicher mit aleatorischem Zugriff; und

– Speichermittel für die Änderung des Inhalts eines jeden der Eingabezeigerregister in Abhängigkeit vom Inhalt der Berichtigungsregister unter dem Befehl der besagten Abtastmittel.

5. Puffervorrichtung gemäss Anspruch 4, ferner dadurch gekennzeichnet, dass jedes der Richtigstellungsregister eine sogenannte Flag-Bit-Position enthält, deren binärer Wert die Betätigung der besagten Transfermittel steuert.

6. Puffervorrichtung gemäss Anspruch 5, ferner dadurch gekennzeichnet, dass jede der Speicherpositionen mit aleatorischem Zugriff, die für die Aufnahme eines Bits von N-Bit bestimmt ist, anfangs mit einem Binärwert gleich 1 geladen wird.

7. Puffervorrichtung gemäss Anspruch 6, ferner dadurch gekennzeichnet, dass die Eingabe eines Datenbits von einer Quelle in den Speicher mit aleatorischem Zugriff bewirkt wird durch einen exklusiven Oder-Vorgang zwischen dem Inhalt der Speicherzeile, die durch die besagten Eingangszeilenadressiermittel adressiert wird, und einem Wort, das von der Verwaltungsroutine definiert wird, auf das das betreffende Eingangszeigerregister deutet.

8. Datenübertragungssystem, in dem die Datenbits von mindestens einer Datenquelle, die mindestens einem aktiv genannten Eingabekanal zugeordnet ist, dafür bestimmt sind, entnommen und durch ein Übertragungssystem weitergeleitet zu werden, das asynchron in Bezug auf die Eingangskadenzen der Bits von den Datenquellen arbeitet, wobei das besagte System dadurch gekennzeichnet ist, dass es eine Puffervorrichtung gemäss einem der Ansprüche 1 bis 7 enthält, angeordnet zwischen den Eingangskanälen und der besagten N-Bit-Entnahmevorrichtung, wobei jedes der besagten entnommenen N-Bits zu Zeitpunkten, die durch die besagte Entnahmevorrichtung bestimmt werden, an die Entnahmevorrichtung übertragen wird.

9. Datenübertragungssystem gemäss Anspruch 8, dadurch gekennzeichnet, dass das besagte Übertragungssystem einer Multiplexiervorrichtung angehört.

10. Datenübertragungssystem gemäss Anspruch 9, dadurch gekennzeichnet, dass der Ausgang der besagten Multiplexiervorrichtung an den Eingang eines Modems angeschlossen ist, das nach den DSB-QC genannten Techniken arbeitet.

11. Übertragungssystem gemäss Anspruch 10, ferner dadurch gekennzeichnet, dass jedes N-Bit verwendet wird, um ein Symbol zu definieren, das vom Modem-Modulator in einem Rhythmus, Baud-Rhythmus genannt, übertragen wird, der den Entnahmerhythmus der N-Bits am Ausgang der Puffervorrichtung bestimmt.

12. Datenübertragungssystem gemäss Anspruch 11, dadurch gekennzeichnet, dass die präzisen Augenblicke, zu denen die Ausgabesteuermittel ein N-Bit aus dem Speicher mit aleatorischem Zugang an das Modem übertragen, durch das Signalverarbeitungsprogramm definiert werden, das die Betätigung eines Mikroprozessors des Modems steuert.

13. Datenübertragungssystem gemäss Anspruch 13, ferner dadurch gekennzeichnet, dass mehrere mögliche Konfigurationen aktiver Kanäle vorgesehen sind und dass für jede der besagten Konfigurationen eine Puffervorrichtung gemäss einem der Ansprüche 1 bis 7 vorgesehen ist.

14. Datenübertragungssystem gemäss Anspruch 12 oder 13, ferner dadurch gekennzeichnet, dass es Mittel enthält, um die Elastizität der Puffervorrichtung zu variieren, wobei besagte Mittel enthalten:

– Mittel für die Änderung der Zeilenzahl des Speichers mit aleatorischem Zugriff; und

– Mittel für die Änderung des Abstandes zwischen den Werten der Anfangsadressen, die in den besagten Ein- und Ausgangszeilenadressiermitteln geladen werden.

## Claims

1. A buffer storage acting as the interface between a plurality of active sources of binary data, each of said sources supplying bits at a specific rate, and a device for collecting said bits in groups of N bits (each group being termed an N-bit) arranged therein in a predetermined order, said buffer storage comprising:

– a random-access memory (66) comprising K rows and at least N columns;

– input row addressing means (EBINX) for defining the specific row of said random-access memory wherein the bits supplied by said sources are to be stored;

– output row addressing means (EBOUT) for defining the specific row of said random-access memory that is to provide said collecting device with an N-bit;

– initialization means for loading initial input and output addresses into said input and output row addressing means;

– output means (70) connected to said N-bit collecting device and to be loaded with the bits stored in the bit positions of the row of said random-access memory being addressed by said output row addressing means;

– output control means (74) for incrementing in a cyclic manner and at the same rate as said collecting device the addresses supplied to said output addressing means;

said buffer storage being characterized in that it further includes:

– input column addressing means (PROCPTRX) for addressing the column(s) of said memory assigned to each of said active sources in a predetermined order according to the arrangement of said bits within an N-bit;

– input control means (ROS 67, NEXTOPER) connected to said input column addressing means in said random-access memory for incrementing in a predetermined and cyclic order, and at rates defined by the rates specific to said sources, the addresses supplied to said input addressing means.

2. A buffer storage according to claim 1, further characterized in that the difference between the initial addresses loaded into said input and output row addressing means is defined beforehand according to the characteristics of said sources and said N-bit collecting device.

3. A buffer storage according to claim 2, further characterized in that said input row addressing means includes a register termed input pointer register (PROCPTR) assigned to each of said active sources.

4. A buffer storage according to any one of claims 1 to 3, characterized in that said input column addressing means further includes:

– a microprogram memory (67) storing N control routines each of which controls the operations performed to store in said random-access memory one of the input bits defined on the basis of its position within the N-bit;

– an input pointer register (PROCPTR) assigned to each of said active sources, each of said input pointer registers serving to store a value representative of the starting address of a routine stored in said microprogram memory;

– a set of N update registers (NEXTOPER);

– scanning means for scanning said update registers at the rate at which bits are loaded into said random-access memory; and

– transfer means for changing the contents of each of said input pointer registers according to the contents of said update registers under the control of said scanning means.

5. A buffer storage according to claim 4, further characterized in that each of said update registers includes a flag bit position whose binary value controls the operation of said transfer means.

6. A buffer storage according to claim 5, further characterized in that each of the bit positions in said random-access memory that is to receive one of the bits of an N-bit is initially loaded with a binary value of «1».

7. A buffer storage according to claim 6, further characterized in that the loading of a data bit from one of said sources into said random-access memory is performed by Exclusive-ORing the contents of the memory row addressed by said input row addressing means and a word defined by the control routine indicated by the input pointer register concerned.

8. A data transmission system wherein data bits from at least one of said data sources attached to at least one active input channel are collected in order to be transmitted by a transmission device operating asynchronously relative to the rates at which bits from said data sources are received, said system being characterized in that it includes a buffer storage according to any one of claims 1 to 7 disposed between the input channels and said N-bit collecting device, each of said collected N-bits being transferred thereto at times defined by said collecting device.

9. A data transmission system according to claim 8, characterized in that said transmission device forms part of a multiplexer.

10. A data transmission system according to claim 9, characterized in that the output of said multiplexer is connected to the input of a modem employing DSB-QC modulation techniques.

11. A data transmission system according to claim 10, further characterized in that each N-bit serves to define a symbol transmitted by the modulator in said modem at a so-called baud rate that determines the rate at which N-bits are to be collected at the output of said buffer storage.

12. A data transmission system according to claim 11, characterized in that the specific times at which said output control means transfers a N-bit from said random-access memory to said modem are defined by the signal processing program that controls the operations performed by a microprocessor in the modem.

13. A data transmission system according to claim 13, further characterized in that provision is made for several possible configurations of active channels and in that provision is made for a buffer storage in accordance with any one of claims 1 to 7 to be used with each of said configurations.

14. A data transmission system according to claim 12 or 13, characterized in that it further comprises means for varying the elasticity of said buffer storage, said means including:
- means for modifying the number of rows in said random-access memory; and
- means for modifying the differences in the values of the initial addresses loaded into said input and output row addressing means.

FIG. 1

FIG. 2

# FIG.3

# FIG. 4